# FASCICULE DE BREVET EUROPEEN

(11) **EP 1 697 185 B1**
(45) Date de publication et mention de la délivrance du brevet: **04.03.2009**
(21) Numéro de dépôt: 04805673.3
(22) Date de dépôt: 09.12.2004
(51) Int. Cl.: B60T 7/04

(54) **DISPOSITIF DE PEDALE DE FREINAGE POUR EFFECTUER UN FREINAGE DE SERVICE ET UN FREINAGE DE BLOCAGE**
BREMSPEDALVORRICHTUNG ZUR BETRIEBSBREMSUNG UND BLOCKIERBREMSUNG
BRAKE PEDAL DEVICE FOR SERVICE BRAKING AND BLOCK BRAKING

(30) Priorité: 23.12.2003 FR 0315231
(43) Date de publication de la demande: 06.09.2006
(73) Titulaire: POCLAIN HYDRAULICS INDUSTRIE, 60411 Verberie (FR)
(72) Inventeur: POPULAIRE, Jean, F-60100 Creil (FR)
(74) Mandataire: Intes, Didier Gérard André
(86) Numéro de dépôt international: PCT/FR2004/003168
(87) Numéro de publication internationale: WO 2005/070739

(56) Documents cités:
- DE-A- 3 019 256
- DE-A- 4 423 563
- US-A- 4 026 164
- US-A- 4 037 487
- US-A- 4 278 143
- US-A- 4 441 380

## Description

L'invention concerne un dispositif de pédale de freinage apte à être actionné pour effectuer un freinage de service et un freinage de blocage d'un véhicule.

Le freinage de service est utilisé lors d'un déplacement d'un véhicule pour le ralentir et/ou pour l'arrêter. Le freinage de service est fonction de la pression exercée par le pied d'un utilisateur sur la pédale de frein.

Le freinage de blocage, quant à lui, permet de garder le véhicule immobilisé pendant une phase de travail. Le freinage de blocage est particulièrement intéressant pour les véhicules de chantier pour lesquels il est nécessaire de maintenir ces derniers immobilisés, par exemple pendant un creusage effectué par une pelle.

On connaît de tels dispositifs par exemple dans la demande WO 96/01199, qui décrit un dispositif de freinage comportant une pédale de frein principale et un élément annexe. Par action sur l'élément annexe, la pédale de frein principale peut être bloquée et le freinage de blocage est alors activé. Le freinage de service est obtenu par pression sur la pédale de frein principale sans actions particulières sur l'élément annexe. Le freinage de blocage est obtenu par appui maximal simultanément sur la pédale de frein principale et l'élément annexe. Le maintien dans cette position de freinage de blocage est obtenu par blocage de la pédale de frein principale, par l'intermédiaire d'un dispositif de blocage comprenant l'élément annexe qui est mis en oeuvre par rotation et déplacement du pied pour libérer cet élément annexe alors que la pédale de frein est maintenue enfoncée. Le freinage de blocage est désactivé dès qu'un appui est effectué sur l'élément annexe.

DE 3019256 décrit une pédalerie conventionel.

Cependant dans ce dispositif de pédale de freinage, le risque d'un freinage de blocage invonlontaire et dangereux, même s'il est limité, existe toujours dès lors qu'un utilisateur appuie à fond simultanément sur la pédale de frein principale et l'élément annexe lors d'un freinage d'urgence. En effet, un utilisateur qui voudrait utiliser le freinage de service uniquement, mais qui appuierait à fond sur la pédale de frein principale en accrochant en même temps l'élément annexe risque d'activer le freinage de blocage, entraînant une immobilisation du véhicule involontaire s'il déplace légèrement son pied et libère malencontreusement l'élément annexe sans libérer en même temps la pédale de frein. Il faudrait alors que l'utilisateur désactive d'urgence le freinage de blocage en appuyant sur l'élément annexe.

Sur le plan ergonomique, ce dispositif présente en outre l'inconvénient de nécessiter pour l'activation et la désactivation du freinage de blocage plusieurs actions successives du pied combinant des mouvements d'appui et de rotation. En particulier, pour l'activation du freinage de blocage, il est indispensable de maintenir l'appui du pied sur la pédale de frein enfoncée tout en tournant, basculant ou déplaçant ce pied pour libérer l'élément annexe. Ce mouvement n'est pas naturel et est malaisé, voire peut être pénible.

On connaît aussi des dispositifs de pédale de freinage qui comportent une pédale de frein principale, un crochet de verrouillage et un axe de verrouillage, ainsi qu'une patte de désactivation du verrouillage. Dans ces dispositifs connus, un appui maximal sur la pédale de frein principale permet de verrouiller cette dernière dans une position de freinage de blocage. Pour déverrouiller le freinage de blocage, il est nécessaire d'appuyer sur la patte de désactivation du verrouillage.

Cependant, pour actionner le freinage de service en évitant d'actionner le freinage de blocage, il est nécessaire d'appuyer simultanément et sur la pédale de frein principale et sur la patte de désactivation du verrouillage, de sorte qu'un appui sur la pédale de frein principale n'entraîne pas un verrouillage de cette dernière en freinage de blocage.

Ainsi, dans ces dispositifs de freinage connus l'activation du freinage de blocage est obtenue à partir d'un freinage de service maximum. On comprend donc, que dans une situation de freinage d'urgence, un utilisateur qui sur la route ne voudrait activer que le freinage de service, mais qui appuierait à fond sur la pédale de frein, risque d'activer un freinage de blocage non désiré.

Un but de l'invention est de fournir un dispositif de pédale de freinage ergonomique qui permet d'activer le freinage de service sans risque d'activation du freinage de blocage et qui permet d'activer et de désactiver le freinage de blocage par une seule et simple action du pied.

Ce but de l'invention est atteint par le fait que le dispositif de pédale de freinage comporte un premier et un deuxième élément de pédale de frein aptes à être déplacés par appui pour effectuer un freinage, un appui sur au moins le premier élément de pédale de frein étant apte à provoquer un freinage de service et par le fait que le dispositif comporte des moyens de verrouillage qui sont aptes à être activés en déplaçant seulement le deuxième élément de pédale de frein selon une course déterminée pour maintenir ce dernier en position bloquée pour un freinage de blocage, et des moyens de déverrouillage qui sont aptes à être activés par un appui sur le premier élément de pédale de frein pour déverrouiller les moyens de verrouillage et libérer le deuxième élément de pédale de frein.

Ainsi, le freinage de service est obtenu par appui sur au moins le premier élément de pédale de frein ou conjointement sur le premier et sur le deuxième élément de pédale de frein. Le dispositif de pédale de freinage comportant des moyens de déverrouillage qui sont aptes à être activés par appui sur le premier élément de pédale de frein, on comprend que le freinage de service, même lorsqu'il est obtenu par un appui maximum sur le premier élément de pédale de frein, ne risque pas d'activer le freinage de blocage. En effet, le freinage de blocage est obtenu par une opération volontaire de l'utilisateur, qui correspond à un appui uniquement sur le deuxième élément de pédale de frein.

Par ailleurs, lorsque le freinage de blocage n'est plus nécessaire, celui-ci peut être désactivé par simple appui sur le premier élément de pédale de frein.

Par des moyens de rappel connus, les premier et deuxième éléments de pédale de frein reviennent en position haute dans laquelle il n'y a pas de freinage lorsque aucune pression n'est exercée sur eux.

Les moyens de verrouillage comportent préférentiellement un organe de retenue fixe et un organe d'accrochage relié au deuxième élément de pédale de frein, l'organe d'accrochage étant apte à s'accrocher à l'organe de retenue pour bloquer le deuxième élément de pédale de frein en position bloquée.

Ainsi, lorsque le deuxième élément de pédale de frein est déplacé par appui volontaire de l'utilisateur, l'organe d'accrochage qui est relié à ce dernier va venir s'accrocher avec l'organe de retenue pour bloquer le deuxième élément de pédale de frein en position bloquée, c'est-à-dire en freinage de blocage.

Les moyens de déverrouillage comportent préférentiellement un premier organe de déverrouillage solidaire du premier élément de pédale de frein et un deuxième organe de déverrouillage solidaire du deuxième élément de pédale de frein, les premier et deuxième organes de verrouillage étant aptes à coopérer pour amener l'organe d'accrochage dans une position de décrochage dans laquelle il est inapte à s'accrocher à l'organe de retenue.

Un simple appui sur le premier élément de pédale de frein permet d'activer ces moyens de déverrouillage pour déverrouiller les moyens de verrouillage en amenant l'organe d'accrochage dans une position de décrochage et libérer ainsi le deuxième élément de pédale de frein. Préférentiellement, selon une première variante, le premier organe de déverrouillage comporte un actionneur de came et le deuxième organe de déverrouillage comporte une came, l'actionneur de came étant apte à venir en contact avec la came lors d'un appui sur le premier élément de pédale de frein pour amener l'organe d'accrochage en position de décrochage.

Ainsi, par appui sur le premier élément de pédale de frein, l'actionneur de came va solliciter la came et amener l'organe d'accrochage dans une position de décrochage, empêchant ainsi l'accrochage de ce dernier ou le libérant si celui-ci était accroché. Il s'ensuit qu'un appui sur le premier élément de pédale de frein permet d'empêcher l'activation d'un freinage de blocage ou de désactiver un freinage de blocage si ce dernier était activé.

Préférentiellement, selon une deuxième variante, le premier organe de déverrouillage comporte une surface d'actionnement et le deuxième organe de verrouillage comporte un levier, la surface d'actionnement étant apte à venir en contact avec le levier lors d'un appui sur le premier élément de pédale de frein pour amener l'organe d'accrochage en position de décrochage.

Ainsi, de manière analogue à la première variante, dès qu'un appui est effectué sur le premier organe de déverrouillage, la surface d'actionnement vient coopérer avec le levier qui amène l'organe d'accrochage dans une position de décrochage dans laquelle il ne peut plus être accroché avec l'organe de retenue ou en est décroché.

Quelle que soit la variante envisagée, le dispositif de pédale de freinage comporte préférentiellement des moyens d'entraînement permettant de déplacer le deuxième élément de pédale de frein avec le premier élément de pédale de frein par un appui unique sur ledit premier élément de pédale de frein.

Ainsi pour obtenir un freinage de service, l'utilisateur n'a pas besoin d'appuyer sur les deux éléments de pédale de frein. En effet, le déplacement du premier élément de pédale de frein par appui sur ce dernier va entraîner, lors de son déplacement, le deuxième élément de pédale de frein.

Les premier et deuxième éléments de pédale de frein présentent préférentiellement des surfaces d'appui qui sont de forme complémentaire de manière à former, lorsque qu'ils sont dans un même plan, une pédale de frein présentant une surface d'appui de contour fermé avantageusement sensiblement rectangulaire.

De manière à faciliter la distinction entre le premier et le deuxième élément de pédale de frein, il peut être prévu que le premier élément de pédale de frein présente une surface plus importante au moins au niveau de la partie d'appui naturelle du pied pour que son actionnement soit naturel en freinage de service. Le deuxième élément de pédale de frein présente alors une partie de plus faible surface au moins au niveau de l'appui naturel du pied pour que son actionnement isolé pour verrouiller la pédale de frein en freinage de blocage ne puisse être que réfléchi et ciblé.

L'invention sera bien comprise et ses avantages apparaîtront mieux à la lecture de la description détaillée qui suit, de modes de réalisation de l'invention représentés à titre d'exemples non limitatifs.

La description se réfère aux dessins annexés, sur lesquels :
- la figure 1 représente une vue de côté d'un dispositif de pédale de freinage selon un premier mode de réalisation en position haute,
- la figure 2 représente en perspective le dispositif de la figure 1 en position de freinage de blocage,
- la figure 3 représente en vue de côté le dispositif de pédale de freinage de la figure 1 en position de freinage de service,
- la figure 4 représente en vue de côté le dispositif de la figure 1 en position de freinage de blocage,
- la figure 5 représente en vue de côté un dispositif de pédale de freinage selon une autre variante en position de freinage de service,
- la figure 6 représente en vue de côté le dispositif de la figure 5 en position de freinage de blocage,
- la figure 7 représente en vue en perspective la figure 5,
- la figure 8 représente schématiquement en vue de côté un détail d'une autre variante du dispositif de pédale de freinage,
- la figure 9 est une vue de côté d'un dispositif de pédale de freinage selon un deuxième mode de réalisation en position haute,
- la figure 10 est une vue de côté le dispositif de pédale de freinage de la figure 9 en position de freinage de blocage, et
- la figure 11 représente le dispositif de la figure 9 en vue de dessus.

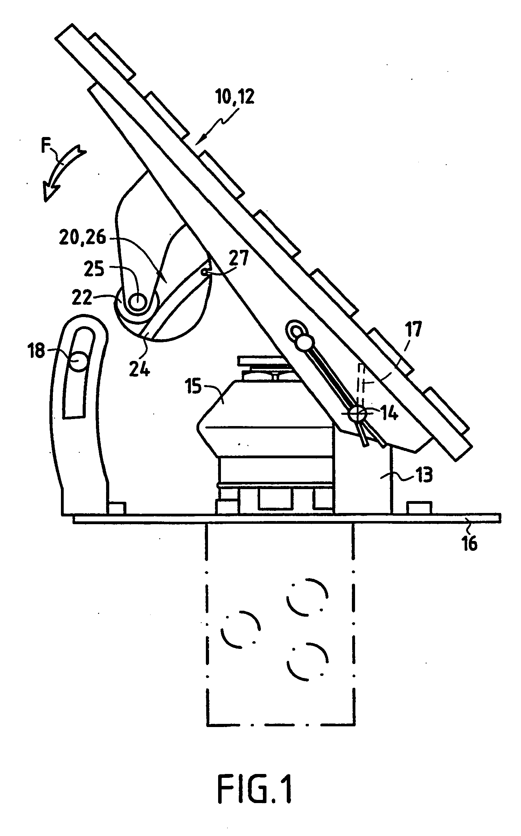

La figure 1 représente un dispositif de pédale de freinage qui comporte un premier et un deuxième élément ou plateau de pédale de frein 10 et 12 adjacents qui pivotent autour d'un même axe de pédale 14 fixe sur un socle 16. Des moyens élastiques connus 17 permettent de maintenir les premier et deuxième éléments de pédale de frein 10 et 12 dans une position haute, correspondant à une absence de freinage, en l'absence d'un quelconque appui et tendent à les ramener vers leur position haute à partir d'une position basse de freinage de service lorsque l'appui sur le premier et/ou deuxième élément de pédale de frein cesse.

Le dispositif de pédale de freinage comporte des moyens de verrouillage, en l'espèce un organe de retenue 18 fixé sur le socle 16 et un organe d'accrochage 20 relié au deuxième élément de pédale de frein 12.

Le dispositif de pédale de freinage comporte en outre des moyens de déverrouillage, en l'espèce un premier organe de déverrouillage 22 solidaire du premier élément de pédale de frein 10 et un deuxième organe de déverrouillage 24 solidaire du deuxième élément de pédale de frein 12. Le deuxième organe de déverrouillage, en l'espèce une came 24, est solidaire de l'organe d'accrochage 20 et forme avec ce dernier une seule pièce 26 en forme de crochet, le crochet étant apte à pivoter autour d'un axe de pivotement 30 relié au deuxième élément de pédale de frein 12 entre deux positions déterminées par un évidement annulaire partiel 31 dont les extrémités peuvent venir en butée sur un pion 29 fixé sur le deuxième élément de pédale de frein 12.

Le premier organe de déverrouillage, en l'espèce un actionneur de came 22, est apte à venir en contact avec la came 24, pour amener l'organe d'accrochage 20 en position de décrochage, dans laquelle les moyens de verrouillage ne peuvent pas être activés, un appui de l'actionneur de came 22 sur la came 24 faisant basculer le crochet 26.

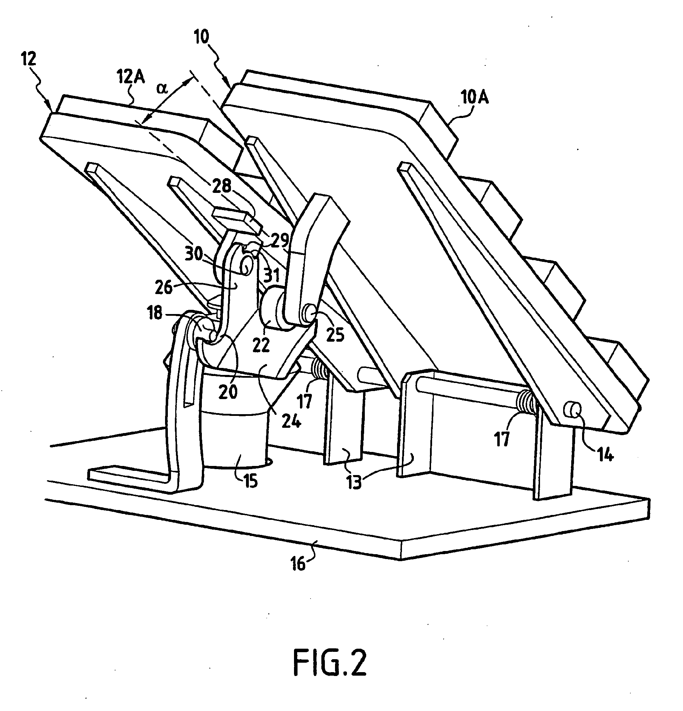

En référence à la figure 2, le dispositif de pédale de freinage comporte des moyens d'entraînement qui comprennent une extension 28 solidaire du deuxième élément de pédale de frein 12 et s'étendant sur le trajet de déplacement du premier élément de pédale de frein 10, de sorte qu'un appui sur le premier élément de pédale de frein 10 entraîne également le deuxième élément de pédale de frein 12.

Le premier élément de pédale de frein 10 présente de préférence une surface d'appui 10A plus importante pour que son actionnement soit naturel en freinage de service et permette un freinage d'urgence sans risque de verrouillage, alors que le deuxième élément de pédale de frein 12 présente une partie d'appui 12A de plus faible surface pour que son actionnement isolé pour verrouiller le deuxième élément de pédale de frein 12 en freinage de blocage ne puisse être que réfléchi et ciblé.

On décrit à présent le fonctionnement d'un tel dispositif de pédale de freinage.

A partir de la position haute dans laquelle il n'y a pas de freinage, comme illustré sur la figure 1, un appui sur au moins le premier élément de pédale de frein 10, selon le sens de la flèche F, va provoquer un déplacement du premier élément de pédale de frein 10 vers une position basse de freinage, en se rapprochant du socle 16. Le déplacement du premier élément de pédale de frein 10 entraînant le déplacement du deuxième élément de pédale de frein 12 par l'intermédiaire de l'extension 28, les premier et deuxième éléments de pédale de frein se déplacent selon le sens de la flèche F vers le socle 16. Le déplacement du deuxième élément de pédale de frein 12 permet d'agir sur un modulateur de freinage 15 de type connu, qui se situe sous cet élément de pédale de frein 12 et qui permet d'effectuer un freinage progressif pour plus de confort et de sécurité.

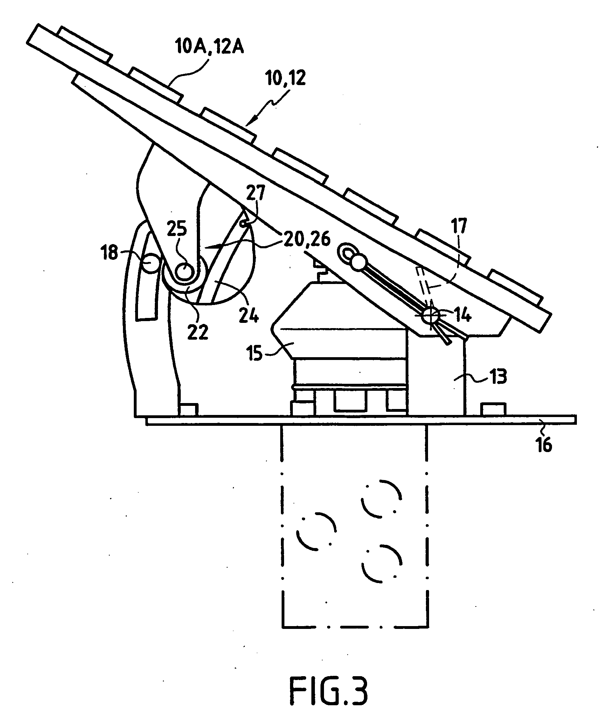

Une autre conséquence de l'appui sur le premier élément de pédale de frein 10 est que l'actionneur de came 22 se trouve en contact avec la came 24 de sorte que l'organe d'accrochage 20 se trouve en position de décrochage, dans laquelle il ne lui est pas possible de venir s'accrocher à l'organe de retenue 18. On se trouve ainsi dans une situation de freinage de service avec le crochet 26 en position de décrochage, c'est-à-dire sans risque d'activation du freinage de blocage, comme illustré sur la figure 3.

En effet, le crochet 26 qui est relié au deuxième élément de pédale de frein 12 par son axe de pivotement 30 se situant en dessous du deuxième élément de pédale de frein 12, s'étendant jusque sous le premier élément de pédale de frein 10. Ainsi, la came 24 et l'actionneur de came 22 se trouvent dans un même aplomb vertical, de sorte qu'ils sont aptes à coopérer en fonction de la position respective des premier et deuxième éléments de pédale de frein 10 et 12. En fait, l'actionneur de came 22 comporte en l'espèce un galet 22 qui est apte à entrer en rotation autour de son axe de galet 25 et qui est apte à coopérer avec la came 24 en roulant le long de cette dernière ou au contraire en être écarté. En conséquence, dès que l'utilisateur appuie sur au moins le premier élément de pédale de frein, le galet 22 roule le long de la came 24 de sorte que le crochet 26 se trouve écarté de l'organe de retenue 18 et ne puisse pas s'accrocher à ce dernier.

Dès que l'utilisateur relâche la pression exercée par son pied sur les premier et deuxième éléments de pédale de frein 10 et 12, ces derniers retournent dans leur position haute (illustrée figure 1) en s'écartant du socle 16 par l'effet du dispositif élastique 17.

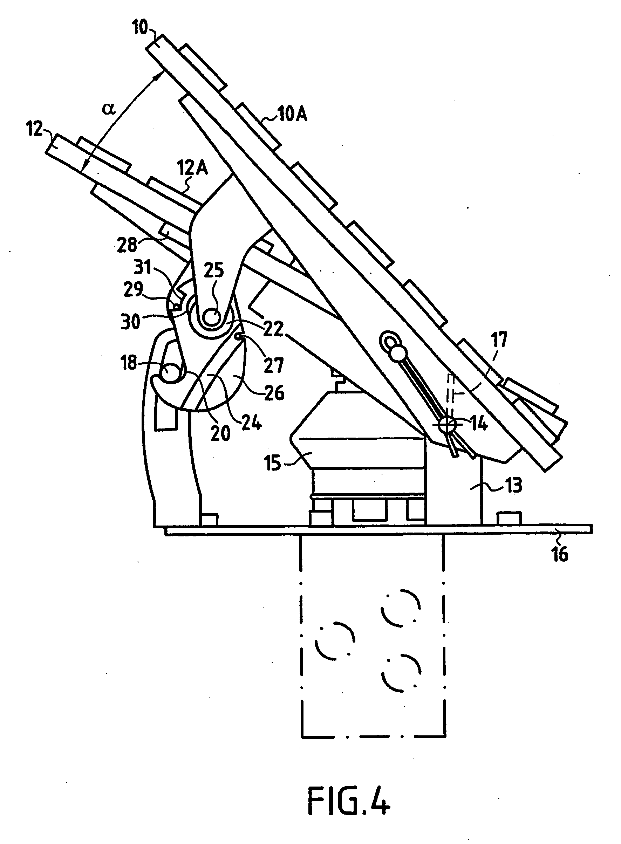

Pour effectuer un freinage de blocage, l'utilisateur doit n'appuyer que sur le deuxième élément de pédale de frein 12 selon une course angulaire a déterminée pour que le crochet 26, et en particulier l'organe d'accrochage 20 puissent se trouver en regard de l'organe de retenue 18. En fait, préférentiellement, il peut agir par simple appui ciblé sur le deuxième élément seul 12. Néanmoins, il lui est possible d'agir par appui simultané sur les deux éléments 10 et 12 auquel cas, il lui faut ensuite libérer le premier élément 10 par pivotement réfléchi du pied, afin de pourvoir bloquer le deuxième élément de pédale de frein pour actionner le freinage de blocage. Le crochet 26 est basculant et il est rappelé en position d'accrochage par un ressort de rappel, par exemple un ressort de torsion 27 présentant une première branche encliquetée sur l'organe d'accrochage 20, un enroulement autour de l'axe 30 et une deuxième branche encliquetée sous le deuxième élément de pédale de frein 12. Pour s'accrocher sur l'organe de retenue 18, le crochet 26 s'escamote en passant contre cet organe de retenue 18 et revient en position d'accrochage si le galet 22 n'exerce pas d'effort sur la came 24. Cette position est illustrée sur les figures 2 et 4. Bien entendu, la course angulaire α indiquée sur ces dessins doit être légèrement augmentée au moment du blocage qui ne se produit que lorsque l'organe d'accrochage 20 revient en position d'accrochage après avoir dépassé l'organe de retenue 18.

Dans cette position, la came 24 est écartée de l'actionneur de came 22 et le crochet 26 peut pivoter autour de son axe de pivotement 30 relié au deuxième élément de pédale de frein 12 et peut alors venir s'accrocher à l'organe de retenue 18. Dès lors, même si l'utilisateur relâche la pression exercée sur le deuxième élément de pédale de frein 12, ce dernier reste dans une position bloquée et le freinage de blocage est maintenu.

Pour désactiver ce freinage de blocage, il suffit à l'utilisateur d'exercer une pression sur le premier élément de pédale de frein 10 qui va entraîner un déplacement de ce dernier vers le socle 16 et ainsi rapprocher l'actionneur de came 22 de la came 24. Dès que l'actionneur de came 22 va venir en contact avec la came 24, la pression exercée sur le premier élément de pédale de frein 10 par l'utilisateur va se transmettre au crochet 26, par le galet 22 qui en roulant sur la came 24 fait basculer le crochet 26 pour que l'organe d'accrochage 20 échappe à l'organe de retenue 18. Ensuite, un relâchement de la pression exercée sur un premier élément de pédale de frein va entraîner un déplacement des premier et deuxième éléments de pédale de frein 10 et 12 vers leur position haute dans laquelle il n'y a plus de freinage.

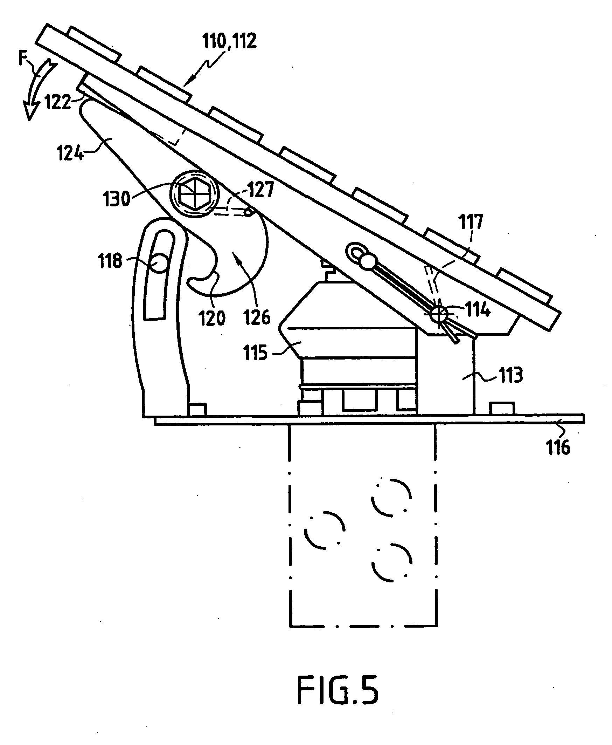

Les figures 5, 6 et 7 illustrent un dispositif de pédale de freinage selon une autre variante. Le dispositif de pédale de freinage comporte un premier élément de pédale de frein 110 et un deuxième élément de pédale de frein 112 adjacents qui pivotent autour d'un même axe de pédale 114 relié à un socle 116. Cette deuxième variante se distingue de la première variante précédemment décrite en ce que les moyens de déverrouillage sont différents.

Les moyens de déverrouillage comportent un organe d'accrochage 120 apte à coopérer avec un organe de retenue 118 fixé au socle 116 de manière à pouvoir s'accrocher à ce dernier pour bloquer le deuxième élément de pédale de frein 112 en position bloquée dans laquelle on obtient un freinage de blocage.

Le crochet 126 se situe sous le premier élément de pédale de frein 110 et son axe de pivotement 130 relié au deuxième élément de pédale de frein 112 dépasse aussi en dessous du premier élément de pédale de frein 110. Le crochet 126 comporte l'organe d'accrochage 120 et le deuxième organe de verrouillage en l'espèce un levier 124 qui s'étendent tous deux sous le premier élément de pédale de frein 110, de part et d'autre de l'axe de pivotement 130. Il s'ensuit qu'un déplacement du premier élément de pédale de frein 110 vers le socle 116 dans la direction de la flèche F va entraîner une coopération de ce dernier avec le levier 124 du crochet 126 de sorte que l'organe d'accrochage 120 se trouve en position de décrochage et qu'un freinage de blocage ne soit pas possible à atteindre.

En l'espèce, il est prévu sur le premier élément de pédale de frein 110 comme premier organe de déverrouillage une surface d'actionnement 122 qui est apte à venir en contact avec le levier 124.

Un dispositif élastique 117 de type connu permet au premier et deuxième élément de pédale de frein 110 et 112 de revenir vers une position haute (non représentée) dans laquelle il n'y a pas de freinage, dès lors que l'utilisateur arrête d'exercer une pression sur les premier et deuxième éléments de pédale de frein 110 et 112, pour autant que le deuxième élément de pédale de frein 112 ne soit pas accroché en position de blocage.

Pour obtenir un freinage de service, il suffit que l'utilisateur appuie sur au moins le premier élément de pédale de frein 110, un déplacement de ce dernier entraînant un déplacement du deuxième élément de pédale de frein 112 par coopération de sa surface d'actionnement 122 avec le levier 124 et un basculement du crochet 126 en position de décrochage. Le déplacement du deuxième élément de pédale de frein 112 permet alors d'agir, comme décrit pour la première variante, sur un modulateur de freinage 115 de type connu, qui se situe sous cet élément de pédale de frein 112.

Pour actionner un freinage de blocage, l'utilisateur doit appuyer uniquement sur le deuxième élément de pédale de frein 112. Il peut être prévu que le centre de gravité du crochet 126 se situe en dessous de son axe de rotation 130, en prévoyant par exemple que la partie du crochet qui comporte l'organe d'accrochage 120 soit plus lourde que la partie du crochet 126 qui comporte le levier 124, de sorte que dès que le deuxième élément de pédale de frein 112 s'écarte du premier élément de pédale de frein 110, le crochet 126 pivote naturellement autour de son axe de pivotement 130 en adoptant une position dans laquelle l'organe d'accrochage 120 soit apte à venir s'accrocher à l'organe de retenue 118. Pour assurer ce bon positionnement d'une autre manière ou en complément avec un tel crochet, comme décrit pour la première variante, un ressort de rappel 127 (similaire au ressort 27 de la première variante) peut être prévu pour amener le crochet 126 dans la position dans laquelle il est apte à s'accrocher à l'organe de retenue dès que le premier élément de pédale de frein 110 se trouve dans sa position haute.

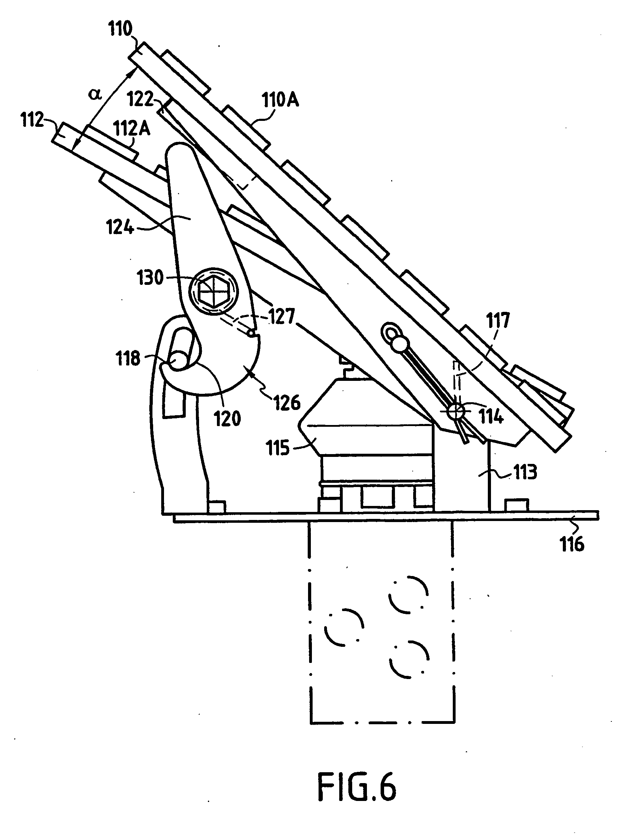

Ainsi, après une course angulaire a déterminée du deuxième élément de pédale de frein 112, le crochet 126 vient s'accrocher à l'organe de retenue 118 et maintient le deuxième élément de pédale de frein en position bloquée pour un freinage de blocage. Comme dans la première variante la course angulaire α représentée sur la figure 6 doit être légèrement augmentée au moment du blocage, pour permettre au crochet 126 de dépasser l'organe de retenue 118 avant de revenir s'y accrocher.

Une simple pression exercée sur le premier élément de pédale de frein 110 va entraîner un basculement du crochet 126 autour de son axe de pivotement 130 et ainsi décrocher l'organe d'accrochage 120 de l'organe de retenue 118 de sorte que le deuxième élément de pédale de frein 112 est libéré et les moyens de verrouillage sont déverrouillés. Il s'ensuit que lorsque l'utilisateur relâche la pression exercée sur le premier élément de pédale de frein, les premier et deuxième éléments de pédale de frein 110 et 112 retournent vers leur position haute dans laquelle il n'y a pas de freinage.

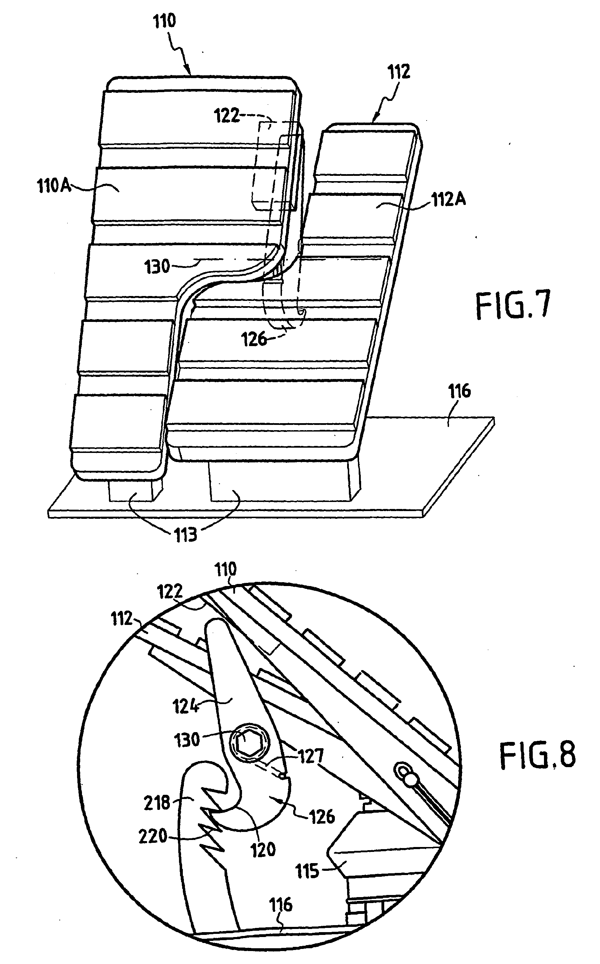

Le premier élément de pédale de frein 110 présente avantageusement, comme illustré sur la figure 7, une surface plus importante au niveau de la partie d'appui naturelle du pied 110A pour que son actionnement soit naturel en freinage de service et permette un freinage d'urgence sans risque de verrouillage, alors que le deuxième élément de pédale de frein 112 présente une partie 112A de plus faible surface au niveau de l'appui naturel du pied pour que l'actionnement en freinage de blocage ne puisse être que réfléchi et ciblé. Les premier et deuxième éléments de pédale de frein 110 et 112 ont des formes telles qu'ils s'imbriquent pour constituer globalement une pédale de frein de forme habituelle, sensiblement rectangulaire dans son plan lorsque les premier et deuxième élément de pédale de frein 110 et 112 se situent dans un même plan.

Les moyens de verrouillage sont activés en position verrouillée pour obtenir un mode freinage de blocage par appui en position basse du seul deuxième élément de pédale de frein 112, le premier élément de pédale de frein 110 étant alors libre.

La position déverrouillée correspondant au freinage de service est obtenue par appui sur le premier élément 110, les moyens de déverrouillage interdisant alors le verrouillage du deuxième élément de pédale de frein 112.

Sur la figure 7, on voit bien que le crochet 126 se trouve en dessous de l'élément de pédale de frein 110 de sorte qu'un déplacement de ce dernier entraîne un déplacement du deuxième élément de pédale de frein 112 par coopération de l'élément de pédale de frein 110 avec le crochet 126.

Sur les figures 1 à 7, la position de l'organe de retenue 18, 118 peut être réglée par rapport au socle, en prévoyant par exemple un téton bloqué dans un trou oblong sensiblement vertical.

Selon une variante avantageuse, les moyens de verrouillage comportent plusieurs positions de verrouillage.

La figure 8 illustre une telle variante de dispositif de pédale de freinage. Tous les éléments identiques à la deuxième variante ont les mêmes références numériques. Cette variante se distingue en ce qu'un couple de freinage de blocage déterminé et variable peut être appliqué selon la pression exercée sur le deuxième élément de pédale de frein, alors qu'un seul couple de freinage maximum pouvait être atteint pour les variantes précitées en freinage de blocage.

La figure 8 représente le dispositif de pédale de freinage en position de freinage de blocage dans laquelle le deuxième élément de pédale de frein 112 est en position basse, tandis que le premier élément de pédale de frein 110 est en position haute.

Dans cette position, de manière analogue à la description précitée de la deuxième variante, le levier 124 du crochet 126 ne coopère pas avec la surface d'actionnement 122 du premier élément de pédale de frein 110 et le crochet 126 se trouve dans une position telle que son organe d'accrochage 120 coopère avec un organe de retenue 218.

L'organe de retenue 218 comporte une crémaillère, eh l'espèce des crans 220 sur chacun desquels l'organe d'accrochage 120 est apte à venir coopérer en fonction de la position dans laquelle se trouve le deuxième élément de pédale de frein 112, permettant ainsi différentes positions bloquées qui correspondent chacune à une course et un couple de freinage de blocage déterminés.

Ainsi, selon le freinage de blocage recherché, l'utilisateur appuiera plus ou moins sur le deuxième élément de pédale de frein 112 pour que l'organe d'accrochage 120 s'accroche à un des crans 220 sélectionnés de l'organe de retenue 218. Le freinage de blocage est désactivé comme précédemment évoqué, par simple pression du pied sur le premier élément de pédale de frein, 110 en rapprochant ce dernier vers le socle 116.

Dans la présente invention, la position bloquée ne correspond pas à la course maximum puisqu'une petite sur-course est nécessaire pour permettre le verrouillage. Le freinage de blocage a donc au plus une valeur légèrement inférieure à celle du freinage de service maximal, par exemple la pression du modulateur de freinage est de 120 bars pour le blocage et de 125 bars en freinage de service.

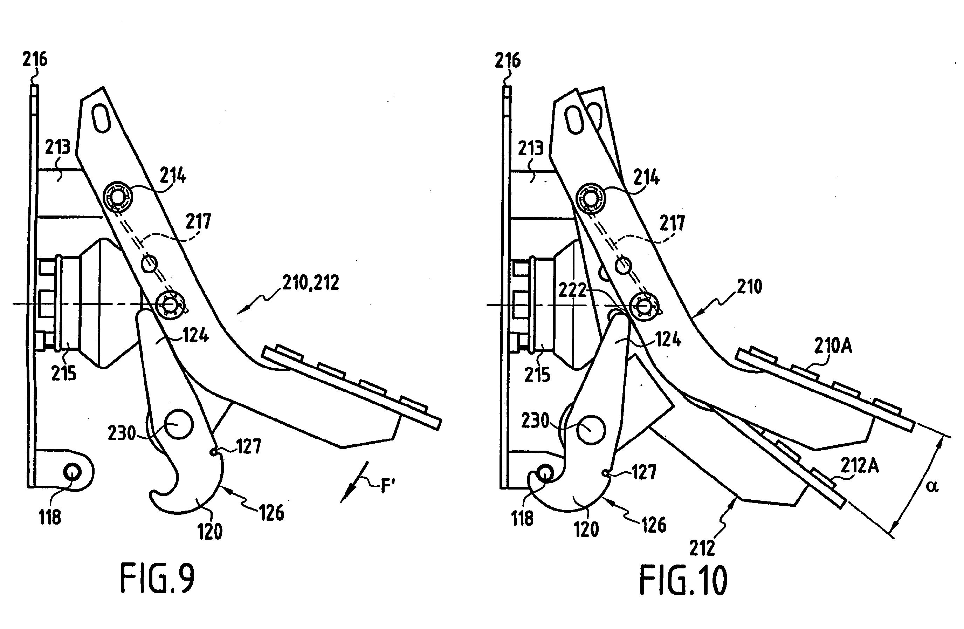

Les figures 9 et 10 illustrent un dispositif de pédale de freinage selon un deuxième mode de réalisation. Le dispositif de pédale de freinage comporte un premier élément de pédale de frein 210 et un deuxième élément de pédale de frein 212 adjacents qui pivotent autour d'un même axe de pédale 214 relié à un support en console 216. Ce deuxième mode de réalisation se distingue du premier, précédemment décrit, en ce que l'agencement du dispositif est différent, en particulier le socle 16 est remplacé par un support en console orienté différemment auquel les éléments de pédale sont suspendus.

Dans le premier mode de réalisation, les éléments de pédale 10 et 12 (ou 110 et 112) sont fixés au plancher (par l'intermédiaire du socle 16) de sorte que le pied d'un utilisateur est quasiment situé sur l'ensemble de la partie d'appui 110A de l'élément de pédale, tandis que dans le deuxième mode de réalisation, les éléments de pédale sont suspendus et les parties d'appui sont réduites. De ce fait, dans le deuxième mode de réalisation, les parties d'appui 210A et 212A ne permettent pas au pied d'être complètement en appui sur elles lors d'un freinage.

En fait, dans le premier mode de réalisation illustré sur les figures 1 à 8, le socle 16 (116) s'étend sensiblement dans un plan qui est globalement parallèle au plan moyen du châssis du véhicule, c'est-à-dire sensiblement horizontal (dans une position habituelle du véhicule). De cette façon, les éléments de pédales de frein 10 et 12 (110 et 112) se situent au dessus du socle 16 (116). Dans ce cas, le modulateur de freinage 15 (115) s'étend sous les éléments de pédales de frein 10 et 12 (110 et 112), sensiblement verticalement. Il en va de même pour le support 13 (113) de l'axe de pédale 14 (114). En fait, l'axe de pédale 14 (114) est situé vers le bas des éléments de pédales de frein 10 et 12 (110 et 112) et est proche du talon d'un utilisateur du dispositif de freinage, de préférence en dessous de l'organe de retenue 18 fixé au socle 16.

Dans le deuxième mode de réalisation, le support en console 216 s'étend toujours sensiblement dans un plan, mais est inclinée par rapport au plan moyen du châssis du véhicule. En l'espèce, le support en console 216 s'étend dans un plan orthogonal au plan moyen du châssis du véhicule, c'est-à-dire sensiblement verticalement (dans une position habituelle du véhicule). De cette façon, les éléments de pédales de frein 210 et 212 ne se situent plus au dessus du socle comme dans le premier mode de réalisation, mais s'étendent de côté par rapport au support en console 216. Le modulateur de freinage 215 s'étend à présent entre le support en console 216 et les pédales, sensiblement horizontalement. Il en va de même pour le support 213 de l'axe de pédale 214.

L'axe de pédale 214 est, dans ce deuxième mode de réalisation, situé vers le haut des éléments de pédales de frein 210 et 212. En fait, l'axe de pédale 214 se situe au dessus de l'organe de retenue 118 fixé au support en console 216.

En conséquence de ces agencements différents, dans le premier mode de réalisation, les éléments de pédales de frein 10 et 12 (110 et 112) sont actionnés par pression du pied de l'utilisateur en haut de la pédale (pression exercée par la pointe du pied), dans le sens de la flèche F, tandis que dans le deuxième mode de réalisation, les éléments de pédales 210 et 212 sont actionnés par pression du pied de l'utilisateur en bas des éléments de pédale, dans le sens de la flèche F', sens qui est opposé à celui de la flèche F par rapport à l'axe 214 de pivotement des éléments de pédale. Le freinage s'effectue alors préférentiellement par appui de la pointe du pied uniquement, le talon n'étant pas situé sur l'élément de pédale, mais restant généralement au contact du plancher du véhicule.

Les moyens de déverrouillage sont du type de ceux décrits dans l'une quelconque des variantes du premier mode de réalisation. En reprenant par exemple, ceux décrits dans la deuxième variante, les moyens de déverrouillage comportent un organe d'accrochage 120 apte à coopérer avec un organe de retenue 118 fixé au support en console 216 pour pouvoir s'accrocher à ce dernier pour bloquer le deuxième élément de pédale de frein 212 en position bloquée dans laquelle on obtient un freinage de blocage.

Le crochet 126 se situe sous le premier élément de pédale de frein 210 et son axe de pivotement 230 relié au deuxième élément de pédale de frein 212 dépasse aussi en dessous du premier élément de pédale de frein 210.

Cependant, contrairement au premier mode de réalisation dans lequel les moyens de déverrouillage se situaient en partie haute des éléments de pédale de frein, en l'espèce plus haut que l'axe de pédale 14 (114), l'axe de pivotement 230 se situe à présent, en dessous de l'axe de pédale 214, en partie basse des éléments de pédale de frein 210 et 212. En fait, l'agencement des moyens de verrouillage et le support des éléments de pédale sont inversés entre les deux modes de réalisation par rapport au modulateur de freinage.

Lors d'un déplacement du premier élément de pédale de frein 210 vers le support en console 216 dans la direction de la flèche F', l'élément de pédale 210 va être amené en coopération avec le levier 124 du crochet 126 de sorte que l'organe d'accrochage 120 se trouve en position de décrochage et qu'un freinage de blocage ne soit pas possible à atteindre, comme illustré sur la figure 9.

Ainsi, pour obtenir un freinage de service, il suffit que l'utilisateur appuie sur au moins le premier élément de pédale de frein 210 dans la direction de la flèche F', un déplacement de ce dernier entraînant un déplacement du deuxième élément de pédale de frein 212 par coopération de sa surface d'actionnement 222 avec le levier 124 et un basculement du crochet 126 en position de décrochage. Le déplacement du deuxième élément de pédale de frein 212 permet alors d'agir, comme décrit précédemment, sur le modulateur de freinage 215, qui se situe sous cet élément de pédale de frein 212.

Pour actionner un freinage de blocage, l'utilisateur doit appuyer uniquement sur le deuxième élément de pédale de frein 212. Le ressort de rappel 127 permet d'amener le crochet 126 dans la position dans laquelle il est apte à s'accrocher à l'organe de retenue dès que le premier élément de pédale de frein 210 se trouve dans sa position haute.

Après une course angulaire α déterminée du deuxième élément de pédale de frein 212, le crochet 126 vient s'accrocher à l'organe de retenue 118 et maintient le deuxième élément de pédale de frein 212 en position bloquée pour un freinage de blocage.

Une simple pression exercée sur le premier élément de pédale de frein 210 permet de basculer le crochet 126 autour de son axe de pivotement 230 et ainsi de décrocher l'organe d'accrochage 120 de l'organe de retenue 118 de sorte que le deuxième élément de pédale de frein 212 est libéré et que les moyens de verrouillage sont déverrouillés. Il s'ensuit que lorsque l'utilisateur relâche la pression exercée sur le premier élément de pédale de frein 210, les premier et deuxième éléments de pédale de frein 210 et 212 retournent vers leur position haute dans laquelle il n'y a pas de freinage.

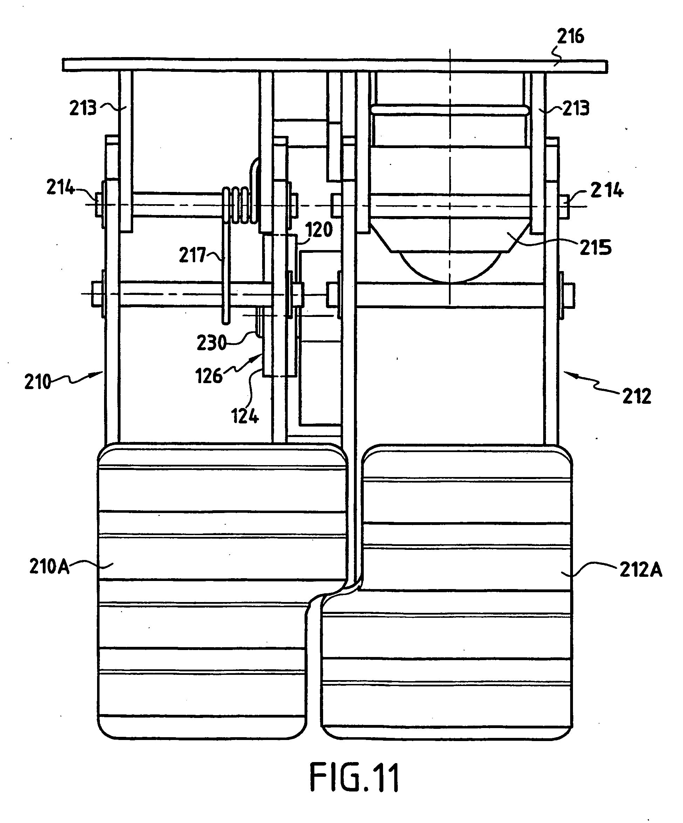

Comme pour le premier mode de réalisation illustré sur la figure 7, il peut aussi être prévu dans ce deuxième mode de réalisation illustré sur la figure 11, une surface plus importante au niveau de la partie d'appui naturelle de la pointe du pied 210A pour que son actionnement soit naturel en freinage de service et permette un freinage d'urgence sans risque de verrouillage. Le deuxième élément de pédale de frein 212 présente alors une partie 212A de plus faible surface au niveau de l'appui naturel de la pointe de pied pour que l'actionnement en freinage de blocage ne puisse être que réfléchi et ciblé. Les premier et deuxième éléments de pédale de frein 210 et 212 ont des formes telles qu'ils s'imbriquent pour constituer globalement une pédale de frein 211 de forme habituelle, sensiblement rectangulaire dans son plan lorsque les premier et deuxième élément de pédale de frein 210 et 212 se situent dans un même plan.

## Revendications

1. Dispositif de pédales de freinage apte à être actionné pour effectuer un freinage de service et un freinage de blocage, comportant un premier (10 ; 110 ; 210) et un deuxième élément de pédale de frein (12 ; 112 ; 212) aptes à être déplacés par appui pour effectuer un freinage, un appui sur au moins le premier élément de pédale de frein (10 ; 110 ; 210) étant apte à provoquer un freinage de service, et des moyens de verrouillage (18, 20 ; 118, 120 ; 218) pour maintenir le deuxième élément de pédale de frein (12 ; 112 ; 212) en position bloquée pour un freinage de blocage, et des moyens de déverrouillage (22, 24; 122, 124; 222, 124), **caractérisé en ce que** les moyens de verrouillage sont aptes à être activés en déplaçant seulement le deuxième élément de pédale de frein (12 ; 112 ; 212) selon une course déterminée (α), et que les moyens de déverrouillage sont aptes à être activés par un appui sur le premier élément de pédale de frein (10 ; 110 ; 210) pour déverrouiller les moyens de verrouillage (18, 20 ; 118, 120 ; 218) et libérer le deuxième élément de pédale de frein (12; 112 ; 212).

2. Dispositif selon la revendication précédente, **caractérisé en ce que** les moyens de verrouillage (18, 20 118, 120 ; 218) comportent un organe de retenue (18 ; 118 ; 218) fixe et un organe d'accrochage (20 ; 120) relié au deuxième élément de pédale de frein (12 ; 112 ; 212), ledit organe d'accrochage (20 ; 120) étant apte à s'accrocher audit organe de retenue (18 ; 118 ; 218) pour bloquer le deuxième élément de pédale de frein (12 ; 112 ; 212) en position bloquée.

3. Dispositif selon la revendication précédente, **caractérisé en ce que** les moyens de déverrouillage (22, 24 ; 122, 124 ; 222, 124) comportent un premier organe de déverrouillage (22 ; 122 ; 222) solidaire du premier élément de pédale de frein (10 ; 110 ; 210) et un deuxième organe de déverrouillage (24 ; 124) solidaire du deuxième élément de pédale de frein (12 ; 112 ; 212), lesdits premier et deuxième organes de déverrouillage (22, 24 ; 122, 124 ; 222, 124) étant aptes à coopérer pour amener l'organe d'accrochage (20 ; 120) dans une position de décrochage dans laquelle il est inapte à s'accrocher à l'organe de retenue (18 ; 118 ; 218).

4. Dispositif selon la revendication 3, **caractérisé en ce que** le deuxième organes de déverrouillage (24 ; 124) est solidaire de l'organe d'accrochage (20 ; 120).

5. Dispositif selon la revendication 4, **caractérisé en ce qu'**il comporte un crochet (26 ; 126) apte à pivoter autour d'un axe de pivotement (30 ; 130 ; 230) solidaire du deuxième élément de pédale de frein (12 ; 112 ; 212) et **en ce que** ledit crochet (26 ; 126) comporte l'organe d'accrochage (20 ; 120) et le deuxième organe de déverrouillage (24 ; 124).

6. Dispositif selon l'une quelconque des revendications 3 à 5, **caractérisé en ce que** le premier organe de déverrouillage (22) comporte un actionneur de came (22), **en ce que** le deuxième organe de déverrouillage (24) comporte une came (24), et **en ce que** l'actionneur de came (22) est apte à venir en contact avec la came (24), lors d'un appui sur le premier élément de pédale de frein (10 ; 110 ; 210), pour amener l'organe d'accrochage (120) en position de décrochage.

7. Dispositif selon l'une quelconque des revendications 3 à 5, **caractérisé en ce** en ce que le premier organe de déverrouillage (122 ; 222) comporte une surface d'actionnement (122 ; 222), en ce que le deuxième organe de déverrouillage (124) comporte un levier (124), et en ce que la surface d'actionnement (122 ; 222) est apte à venir en contact avec le levier (124), lors d'un appui sur le premier élément de pédale de frein (10 ; 110 ; 210), pour amener l'organe d'accrochage (120) en position de décrochage.

8. Dispositif selon les revendications 5 et 7, **caractérisé en ce que** l'organe d'accrochage (120) et le levier (124) s'étendent de part et d'autre de l'axe de pivotement (130).

9. Dispositif selon l'une quelconque des revendications précédentes, **caractérisé en ce qu'**il comporte des moyens d'entraînement (28 ; 122 ; 222) permettant de déplacer le deuxième élément de pédale de frein (12 ; 112 ; 212) avec le premier élément de pédale de frein (10 ; 110 ; 210) par un appui sur ledit premier élément de pédale de frein (10 ; 110 ; 210).

10. Dispositif selon la revendication 9, **caractérisé en ce que** les moyens d'entraînement (28) comportent une extension (28) solidaire du deuxième élément de pédale de frein (12) qui s'étend sur le trajet de déplacement du premier élément de pédale de frein (10).

11. Dispositif selon la revendication 5 et l'une quelconque des revendications 7 à 9, **caractérisé en ce que** le crochet (126) s'étend au moins en partie sur le trajet de déplacement du premier élément de pédale de frein (110 ; 210).

12. Dispositif selon l'une quelconque des revendications précédentes, **caractérisé en ce que** les premier et deuxième éléments de pédale de frein (10, 12 ; 110, 112 ; 210, 212) présentent des surfaces d'appui (10A, 110A ; 210A ; 12A, 112A; 212A) qui sont de formes complémentaires pour former, lorsque les premier et deuxième éléments de pédale de frein (10, 12 ; 110, 112 ; 210, 212) sont dans un même plan, une pédale de frein (211) présentant une surface d'appui de contour fermé avantageusement sensiblement rectangulaire.

13. Dispositif selon l'une quelconque des revendications précédentes, **caractérisé en ce que** les premier et deuxième éléments de pédale de frein (10, 12 ; 110, 112 ; 210, 212) sont adjacents.

14. Dispositif selon la revendication 13, **caractérisé en ce que** les premier et deuxième éléments de pédale de frein (10, 12 ; 110, 112 ; 210, 212) pivotent autour d'un même axe de pédale de frein (14 ; 114 ; 214).

15. Dispositif selon l'une quelconque des revendications précédentes, **caractérisé en ce que** les moyens de verrouillage (218) comportent plusieurs positions de verrouillage.

16. Dispositif selon les revendications 2 et 15, **caractérisé en ce que** l'organe de retenue (218) comporte une crémaillère (220).

## Claims

1. A brake pedal device suitable for being actuated to effect service braking and lock braking, said brake pedal device comprising a first brake pedal element (10; 110; 210) and a second brake pedal element (12; 112; 212), which elements are suitable for being moved by being depressed for effecting braking, depressing at least the first brake pedal element (10; 110; 210) being suitable for causing service braking to take place, and locking means (18, 20; 118, 120; 218) for holding the second brake pedal element (12; 112; 212) in the locked position for lock braking, and unlocking means (22, 24; 122, 124; 222, 124), **characterized in that** the locking means are suitable for being activated by moving the second brake pedal element (12; 112; 212) over a determined stroke (α) only, and **in that** the unlocking means are suitable for being activated by depressing the first brake pedal element (10; 110; 210) so as to unlock the locking means (18, 20; 118, 120; 218) and so as to release the second brake pedal element (12; 112; 212).

2. A device according to the preceding claim, **characterized in that** the locking means (18, 20; 118, 120; 218) comprise a retaining member (18; 118; 218) that is stationary and a catch member (20; 120) that is connected to the second brake pedal element (12; 112; 212), said catch member (20; 120) being suitable for engaging with said retaining member (18; 118; 218) for locking the second brake pedal element (12; 112; 212) in the locked position.

3. A device according to the preceding claim, **characterized in that** the unlocking means (22, 24; 122, 124; 222, 124) comprise a first unlocking member (22; 122; 222) securely connected to the first brake pedal element (10; 110; 210) and a second unlocking member (24; 124) securely connected to the second brake pedal element (12; 112; 212), said first and second unlocking members (22, 24; 122, 124; 222, 124) being suitable for co-operating to bring the catch member (20; 120) into a disengagement position in which it is incapable of engaging with the retaining member (18; 118; 218).

4. A device according to claim 3, **characterized in that** the second unlocking member (24; 124) is securely connected to the catch member (20; 120).

5. A device according to claim 4, **characterized in that** it further comprises a hook (26; 126) suitable for pivoting about a pivot pin and axis (30; 130; 230) securely connected to the second brake pedal element (12; 112; 212), and **in that** said hook (26; 126) comprises the catch member (20; 120) and the second unlocking member (24; 124).

6. A device according to any one of claims 3 to 5, **characterized in that** the first unlocking member (22) comprises a cam actuator (22), **in that** the second unlocking member (24) comprises a cam (24), and **in that** the cam actuator (22) is suitable for coming into contact with the cam (24), when the first brake pedal element (10; 110; 210) is depressed, so as to bring the catch member (120) into the disengagement position.

7. A device according to any one of claims 3 to 5, **characterized in that** the first unlocking member (122; 222) comprises an actuating surface (122; 222), **in that** the second unlocking member (124) comprises a lever (124), and **in that** the actuating surface (122; 222) is suitable for coming into contact with the lever (124) when the first brake pedal element (10; 110; 210) is depressed, so as to bring the catch member (120) into the disengagement position.

8. A device according to claims 5 and 7, **characterized in that** the catch member (120) and the lever (124) extend on either side of the pivot pin and axis (130).

9. A device according to any preceding claim, **characterized in that** it further comprises drive means (28; 122; 222) making it possible to move the second brake pedal element (12; 112; 212) with the first brake pedal element (10; 110; 210) by depressing said first brake pedal element (10; 110; 210).

10. A device according to claim 9, **characterized in that** the drive means (28) comprise an extension (28) that is securely connected to the second brake pedal element (12) and that extends into the path along which the first brake pedal element (10) moves.

11. A device according to claim 5, and to any one of claims 7 to 9, **characterized in that** the hook (126) extends at least in part into the path along which the first brake pedal element (110; 210) moves.

12. A device according to any preceding claim, **characterized in that** the first and second brake pedal elements (10, 12; 110, 112; 210, 212) have depress surfaces (10A, 110A; 210A; 12A, 112A; 212A) which are of complementary shape so that, when the first and second brake pedal elements (10, 12; 110, 112; 210, 212) are in the same plane, said depress surfaces form a brake pedal (211) having a depress surface of closed outline that is advantageously substantially rectangular.

13. A device according to any preceding claim, **characterized in that** the first and second brake pedal elements (10, 12; 110, 112; 210, 212) are adjacent.

14. A device according to claim 13, **characterized in that** the first and second brake pedal elements (10, 12; 110, 112 ; 210, 212) pivot about the same brake pedal pin and axis (14; 114; 214).

15. A device according to any preceding claim, **characterized in that** the locking means (218) have a plurality of locking positions.

16. A device according to claim 2 and claim 15, **characterized in that** the retaining member (218) is provided with a rack (220).

## Patentansprüche

1. Bremspedalvorrichtung, die betätigt werden kann, um eine Betriebsbremsung und eine Blockierbremsung zu bewirken, umfassend ein erstes Bremspedalelement (10; 110; 210) und ein zweites Bremspedalelement (12; 112; 212), die durch Drücken bewegt werden können, um eine Bremsung zu bewirken, wobei ein Drücken auf wenigstens das erste Bremspedalelement (10; 110; 210) eine Betriebsbremsung bewirken kann und wobei die Vorrichtung Verriegelungsmittel (18, 20; 118, 120; 218), um das zweite Bremspedalelement (12; 112; 212) für eine Blockierbremsung in blockierter Stellung zu halten, sowie Entriegelungsmittel (22, 24; 122, 124; 222, 124) aufweist, **dadurch gekennzeichnet, dass** die Verriegelungsmittel geeignet sind, **dadurch** aktiviert zu werden, daß lediglich das zweite Bremspedalelement (12; 112; 212) entlang einem bestimmten Weg (α) bewegt wird, und daß die Entriegelungsmittel geeignet sind, durch ein Drücken auf das erste Bremspedalelement (10; 110; 210) aktiviert zu werden, um die Verriegelungsmittel (18, 20; 118, 120; 218) zu entriegeln und um das zweite Bremspedalelement (12; 112; 212) freizugeben.

2. Vorrichtung nach dem vorhergehenden Anspruch, **dadurch gekennzeichnet, daß** die Verriegelungsmittel (18, 20; 118, 120; 218) ein festes Halteorgan (18, 118; 218) sowie ein mit dem zweiten Bremspedalelement (12; 112; 212) verbundenes Einhakorgan (20; 120) umfassen, wobei das Einhakorgan (20; 120) geeignet ist, sich mit dem Halteorgan (18; 118; 218) zu verhaken, um das zweite Bremspedalelement (12; 112; 212) in der blockierten Stellung zu blockieren.

3. Vorrichtung nach dem vorhergehenden Anspruch, **dadurch gekennzeichnet, daß** die Entriegelungsmittel (22, 24; 122, 124; 222, 124) ein erstes Entriegelungsorgan (22; 122; 222), das mit dem ersten Bremspedalelement (10; 110; 220) fest verbunden ist, sowie ein zweites Entriegelungsorgan (24; 124), das mit dem zweiten Bremspedalelement (12; 112; 212) fest verbunden ist, umfassen, wobei das erste und das zweite Entriegelungsorgan (22, 24; 122, 124; 222, 124) geeignet sind, zusammenzuwirken, um das Einhakorgan (20; 120) in eine Aushakstellung zu bringen, in der es nicht in der Lage ist, sich mit dem Halteorgan (18; 118; 218) zu verhaken.

4. Vorrichtung nach Anspruch 3, **dadurch gekennzeichnet, daß** das zweite Entriegelungsorgan (24; 124) mit dem Einhakorgan (20; 120) fest verbunden ist.

5. Vorrichtung nach Anspruch 4, **dadurch gekennzeichnet, daß** sie einen Haken (26; 126) aufweist, der um eine mit dem zweiten Bremspedalelement (12; 112; 212) fest verbundene Schwenkachse (30; 130; 230) schwenkbar ist, und daß der Haken (26; 126) das Einhakorgan (20; 120) und das zweite Entriegelungsorgan (24; 124) umfaßt.

6. Vorrichtung nach einem der Ansprüche 3 bis 5, **dadurch gekennzeichnet, daß** das erste Entriegelungsorgan (22) eine Nockenbetätigungseinrichtung (22) umfaßt, daß das zweite Entriegelungsorgan (24) einen Nocken (24) aufweist und daß die Nockenbetätigungseinrichtung (22) geeignet ist, bei einem Drücken auf das erste Bremspedalelement (10; 110; 210) mit dem Nocken (24) in Kontakt zu kommen, um das Einhakorgan (120) in die Aushakstellung zu bringen.

7. Vorrichtung nach einem der Ansprüche 3 bis 5, **dadurch gekennzeichnet, daß** das erste Entriegelungsorgan (122; 222) eine Betätigungsfläche (122; 222) aufweist, daß das zweite Entriegelungsorgan (124) einen Hebel (124) aufweist und daß die Betätigungsfläche (122; 222) geeignet ist, bei einem Drücken auf das erste Bremspedalelement (10; 110; 210) mit dem Hebel (124) in Kontakt zu kommen, um das Einhakorgan (120) in die Aushakstellung zu bringen.

8. Vorrichtung nach den Ansprüchen 5 und 7, **dadurch gekennzeichnet, daß** das Einhakorgan (120) und der Hebel (124) sich auf beiden Seiten der Schwenkachse (130) erstrecken.

9. Vorrichtung nach einem der vorhergehenden Ansprüche, **dadurch gekennzeichnet, daß** sie Antriebsmittel (28; 122; 222) umfaßt, die ermöglichen, durch ein Drücken auf das erste Bremspedalelement (10; 110; 210) das zweite Bremspedalelement (12; 112; 212) mit dem ersten Bremspedalelement (10; 110; 210) zu bewegen.

10. Vorrichtung nach Anspruch 9, **dadurch gekennzeichnet, daß** die Antriebsmittel (28) eine mit dem zweiten Bremspedalelement (12) fest verbundene Erweiterung (28) umfassen, die sich über den Verstellweg des ersten Bremspedalelements (10) erstreckt.

11. Vorrichtung nach Anspruch 5 und einem der Ansprüche 7 bis 9, **dadurch gekennzeichnet, daß** der Haken (126) sich wenigstens teilweise über den Verstellweg des ersten Bremspedalelements (110; 210) erstreckt.

12. Vorrichtung nach einem der vorhergehenden Ansprüche, **dadurch gekennzeichnet, daß** das erste und das zweite Bremspedalelement (10, 12; 110, 112; 210, 212) Auflageflächen (10A, 110A; 210A; 12A, 112A; 212A) mit ergänzenden Formen aufweisen, um dann, wenn sich das erste und das zweite Bremspedalelement (10, 12; 110, 112; 210, 212) in einer gleichen Ebene befinden, ein Bremspedal (211) zu bilden, das eine vorteilhafterweise im wesentlichen rechteckige Auflagefläche mit geschlossener Kontur aufweist.

13. Vorrichtung nach einem der vorhergehenden Ansprüche, **dadurch gekennzeichnet, daß** das erste und das zweite Bremspedalelement (10, 12; 110, 112; 210, 212) aneinandergrenzen.

14. Vorrichtung nach Anspruch 13, **dadurch gekennzeichnet, daß** das erste und das zweite Bremspedalelement (10, 12; 110, 112; 210, 212) um eine gleiche Bremspedalachse (14; 114; 214) schwenken.

15. Vorrichtung nach einem der vorhergehenden Ansprüche, **dadurch gekennzeichnet, daß** die Verriegelungsmittel (218) mehrere Verriegelungsstellungen aufweisen.

16. Vorrichtung nach den Ansprüchen 2 und 15, **dadurch gekennzeichnet, daß** das Halteorgan (218) eine Zahnstange (220) umfaßt.
